# EUROPÄISCHE PATENTSCHRIFT

(11) **EP 1 204 597 B1**
(45) Veröffentlichungstag und Bekanntmachung des Hinweises auf die Patenterteilung: **15.12.2004**
(21) Anmeldenummer: 00938515.4
(22) Anmeldetag: 21.04.2000
(51) Int. Cl.: C01F 7/02, C01F 7/34, C04B 35/10, C25D 13/02

(54) **VERFAHREN ZUR HERSTELLUNG VON ALUMINIUMOXIDEN UND DARAUS HERGESTELLTE PRODUKTE**
METHOD OF PRODUCING ALUMINUM OXIDES AND PRODUCTS OBTAINED ON THE BASIS THEREOF
PROCEDE DE PRODUCTION D'OXYDES D'ALUMINIUM ET PRODUITS OBTENUS A PARTIR DE CES DERNIERS

(30) Priorität: 14.05.1999 DE 19922492
(43) Veröffentlichungstag der Anmeldung: 15.05.2002
(60) Teilanmeldung: 04400002.4
(73) Patentinhaber: Fraunhofer-Gesellschaft zur Förderung der angewandten Forschung e.V., 80686 München (DE)
(72) Erfinder: KRELL, Andreas, D-01217 Dresden (DE); MA, Hongwei, D-01257 Dresden (DE)
(74) Vertreter: Rauschenbach, Marion, Dipl.-Ing.
(86) Internationale Anmeldenummer: PCT/DE2000/001310
(87) Internationale Veröffentlichungsnummer: WO 2000/069790

(56) Entgegenhaltungen:
- EP-A- 0 294 208
- EP-A- 0 554 908
- WO-A-95/12547
- DE-A- 4 116 523
- DE-A- 4 407 296
- US-A- 4 259 311
- US-A- 4 562 059

## Beschreibung

Die Erfindung bezieht sich auf das Gebiet der technischen Keramik und betrifft ein Syntheseverfahren für Aluminiumoxide, die ganz oder überwiegend eine Korundstruktur aufweisen, und daraus hergestellte Produkte, wie sie beispielsweise als Pulverrohstoffe, als poröse Filtrationsmembranen oder Katalysatorträger, als dichtgesinterte Substratschichten oder kompakte Verschleißteile eingesetzt werden können.

Keramische Sinterprodukte auf der Basis von Aluminiumoxid (Al₂O₃) und speziell aus Korund (α-Al₂O₃) finden wegen der vorteilhaften chemischen und oxidativen Beständigkeit dieser Stoffe - insbesondere in der letztgenannten Modifikation - breite Verwendung. Dies gilt sowohl für dichtgesinterte Produkte (z.B. als Werkzeugwerkstoff oder verschleißresistente Maschinenbauteile) wie auch für poröse Ausführungen (z.B. als Katalysatorträger oder als Filterwerkstoff). Während dichte Gefüge mit Kristallitgrößen > 2 µm seit langen Stand der Technik sind, wurden Submikrometer-Strukturen erst seit Mitte der achtziger Jahre durch neue Sol/Gel-Verfahren und seit Anfang der neunziger Jahre durch die Verfügbarkeit feinkristallinerer Korundpulver (Korngrößen ≥ 150 nm) herstellbar. Die Entwicklung immer feiner strukturierter Sintergefüge ist seitdem ein vorrangiges Ziel der keramischen Werkstoffentwicklung, sowohl auf dem Gebiet dichtgesinterter Erzeugnisse mit dem Ziel höherer Härte und Verschleißresistenz wie auf dem Gebiet poröser Stoffe, z.B. für Ultrafiltrationsmembranen. Weitere Fortschritte werden dabei entscheidend von der Weiterentwicklung der immer feinkörnigeren Rohstoffe bestimmt.

Synthetisierte keramische Rohstoffe können in sehr unterschiedlicher Form vorliegen: in einer für den nachfolgenden Herstellungsprozeß keramischer Produkte unmittelbar zu verwendenden Phasenmodifikation (z.B. als Korund [α-Al₂O₃]), in einer intermediären Phase (z.B. als eine der sogenannten Übergangstonerden wie γ-Al₂O₃, die für bestimmte keramische Prozesse auch unmittelbar nutzbar sind) oder als chemische Vorstufen (sogenannte Precursoren). So können Aluminium-Monohydrate AIOOH, kristallisiert als Böhmit oder als Diaspor, als Precursoren zur Herstellung der Tonerden dienen, während noch eine Stufe zuvor Verbindungen wie Aluminium-Chlorohydrat Al₂(OH)₅Cl · (2...3H₂O), Aluminium-sec-Butoxid Al[O(CH₃)CHC₂H₅]₃ oder Aluminium-tri-Isopropoxid Al[OCH(CH₃)₂]₃ anorganische oder organische Precursoren zur Herstellung von AIOOH darstellen. Wie z.B. der Böhmit können die meisten dieser Rohstoffe als Lösung, als Sol, als Dispersion in flüssigen Medien (z.B. in Wasser) oder als trockene Pulver vorliegen und dabei unterschiedliche Agglomerationsoder Aggregationszustände aufweisen. Wenn die Kristallite als zusammenhängende Aggregate, als mit einfachen Mitteln nicht auflösbare Agglomerate oder auch als separate, leicht dispergierbare Einzelkristallite auftreten können, so ist der letztgenannte Fall der für viele keramische Verarbeitungsverfahren angestrebte. Er ist aber mit abnehmender Kristallitgröße zunehmend schwerer zu realisieren, so dass die Größe dispergierbarer Partikel meist erheblich großer ist als die Kristallitgröße.

Für eine quantitative, technisch relevante Bewertung der Feinkörnigkeit solcher Rohstoffe muß deshalb sorgfältig zwischen der vorzugsweise röntgenographisch bestimmten Primärteilchengröße (oft als *Kristallitgröße* bezeichnet) und der Größe separater *Partikel* unterschieden werden. Letztere bestimmt man an gut dispergierten Pulversuspensionen z.B. mittels dynamischer Lichtstreuung, Laserbeugung oder Sedimentation (gekoppelt mit Extinktionsmessung). Neben dem Medianwert der volumenmäßigen Verteilung D₅₀ (entsprechend 50 Vol.-%) ist für das technische Verhalten der Pulver das gröbere Ende der Verteilung von besonderer Bedeutung, gekennzeichnet z.B. durch D₈₄. Die bei Fehlen ausreichender Pulvermengen oft ersatzweise praktizierte Abschätzung mittlerer Teilchengrößen aus der spezifischen Oberfläche oder aus qualitativen Bewertungen elektronenmikroskopischer Aufnahmen kann zu gravierenden Fehleinschätzungen führen, im ersten Fall weil die spezifische Oberfläche infolge der Beiträge von Oberflächenrauhigkeit und Feinstkornanteilen oft erheblich höher ist als einer mittleren Korngröße entsprechend, im zweiten Fall wegen der oft ungenügenden Unterscheidbarkeit zusammenhängender Kristallite und dispergierbarer Partikel im elektronenmikroskopischen Bild. So berichten W.M. Zeng u.a. (NanoStructured Mater. 10(1998)4, 543-550) von einem synthetisierten "Nano-" Korund mit mittleren Kristallitgrößen um 25-30 nm (abgeschätzt nach spezifischer Oberfläche und TEM), während die volumenmäßige Partikelgrößenverteilung mit d₅₀ = 0,75 µm den dreifachen Medianwert der feinsten seit 10 Jahren kommerziell verfügbaren Korundpulver aufweist.

Für die Einschätzung technisch (z.B. für die Verarbeitbarkeit) relevanter Eigenschaften ist es unabdingbar, die *masse-* oder *volumen*mäßige Charakteristik der Partikelgrößenverteilung zu bewerten, anstelle anzahlmäßiger Verteilungen. Letzteres wird oft bevorzugt, wenn unausgereifte Verfahren sehr kleine synthetisierte Pulvermengen ergeben, die nicht mittels üblicher Partikelmeßtechnik zu bewerten sind, so dass Verteilungen durch Auszählen der Teilchen an Hand elektronenmikroskopischer Aufnahmen abgeschätzt werden. Wo die Umrechnung in eine volumenmäßige Verteilung unterbleibt, täuscht dann das zahlenmäßige Übergewicht des Feinstkornanteils technisch irreal-niedrige Verteilungsparameter vor und kann erhebliche Fehlurteile bewirken. So berichtet eine Publikation von einem sogenannten "Nano-" Korundpulver mit einer Primärteilchengröße von 50-60 nm (entsprechend dem Maximum der anzahlmäßigen Verteilungskurve) und merkt an, 90 % der Partikel seien kleiner als 90 nm (D. Burgard u.a., Jahresbericht des Instituts für neue Materialien, Saarbrücken, 1996, S. 46-49). Die angeführte Anzahl-Verteilung zeigt indessen, dass der Medianwert D₅₀ der volumenmäßigen Verteilung (entsprechend 50 Vol.-%) 170 nm und D₉₀ = 300 nm ist. Damit ist auch dieses "Nano-" Pulver nicht feinkörniger als die feinsten kommerziell seit zehn Jahren erhältlichen Korunde (z.B. TM-DAR der Fa. Boehringer Chemicals Japan mit D₅₀ = 140-200 nm).

Die feinkörnigsten heute zu Preisen < 150 DM/kg kommerziell erhältlichen Korundpulver zeigen mittlere Partikelgrößen ≥ 150 nm. Mit größerem Aufwand lassen sich daraus weiterverwendbare Fraktionen < 200 nm mit D₅₀ = 120 nm gewinnen, jedoch kaum noch nennenswerte Anteile < 100 nm. Noch feinere Al₂O₃-Pulver sind als sogenannte Übergangstonerden (z.B. γ- oder δ-Al₂O₃) verfügbar, und auch bei der Sol/Gel-Synthese dühner Ultrafiltrationsmembranen entstehen Schichten aus solchen Übergangsphasen; noch feinere Poren werden auf Basis von Zeolithen, TiO₂ oder Mischoxiden erzeugt. Diese Phasen sind jedoch sowohl bezüglich ihrer eigenen Eigenschaften wie auch bezüglich ihres Verhaltens bei der Weiterverarbeitung mit einer Reihe von Unzulänglichkeiten behaftet:
- Bei der Nutzung von Übergangsphasen des Al₂O₃ (z.B. als γ-Al₂O₃-Ultrafiltrationsmembran mit Porengrößen ≥ ca. 3 nm) ist die chemische und thermische Beständigkeit der Produkte deutlich geringer, als für Korunde. Letztere sind aber bisher nicht in gleicher Feinkörnigkeit herstellbar, weil die Überführung der Übergangstonerden in die α-Phase erst bei höheren Temperaturen abläuft und dann mit einer Vergröberung der Partikel verbunden ist.
- Unabhängig vom Herstellungsweg zur Synthese von feinkristallinerem Böhmit, ausgehend von kommerziellem Böhmit (A. Larbot u.a., High Tech. Ceram. (1987) 143-151) oder durch kontrollierte Hydrolyse organischer Precursoren ("Yoldas-Verfahren", S. Alami-Younssi u.a., J. Membr. Sci. (1995) Special Issue, 123-129), liegen die feinsten mit Al₂O₃-Membranen (γ-Phase) erzielbaren mittleren Porendurchmesser bei Werten zwischen ca. 3 und 5 nm, wobei der als Zwischenstufe gebildete Böhmit eine stark anisotrope Partikelform des Al₂O₃ erzeugt, welche die Permeabilität um einen Faktor 2-3 vermindert (A.F.M. Leenars u.a., J. Membrane Sci. 24 (1985) 245-260). Die Kombination mit hydrothermaler Behandlung ermöglicht Porengrößen um 2,5 nm, wenn bei so tiefer Temperatur kalziniert wird, dass die vollständige Umwandlung in Al₂O₃ unterbleibt (M.S. Najjar u.a., US - 5 139 540: "membrane of ... alumina *containing aluminum-oxygen repeating units and bearing alkoxide groups").* Die Herstellung von nichtmetallischanorganischen Membranen mit Porengrößen von weniger als 1-3 nm wurde bisher für Stoffe minderer chemischer Beständigkeit wie Hydroxide, Zeolithe, andere SilikatVerbindungen sowie auf TiO₂- und ZrO₂-Basis beschrieben. Auf dem Gebiet der Al₂O₃-Werkstoffe wurden Porengrößen zwischen 0,5 und 2,5 nm für "aluminiumoxidische" Massen undefinierter Phase beschrieben, jedoch schließt die sehr spezielle Herstellung aus schwierig zu synthetisierenden, äußerst reaktiven und kompliziert handhabbaren Aluminoxanen eine breitere Nutzbarkeit, z.B. für Filtrationsmembranen, aus (N. v. Thienen, DE - 196 38 442 A1: Wirbelschicht-Hydrolyse in Inertgas mit kleinsten Mengen an Wasserdampf über gekühltem Eis).
- Bei der Herstellung dichter Sinterprodukte ausgehend von Übergangstonerden oder (im Rahmen von Sol/Gel-Verfahren) von Precursoren kommt es zur unvermeidlichen Abfolge einer ganzen Reihe von Phasentransformationen, die alle keimbildungskontrolliert an zunächst wenigen Stellen des noch porösen Körpers beginnen und sich dann ausgehend von solchen Keimen kugelförmig ausbreiten. Die räumlich heterogene Verteilung der zufälligen Keime läßt unregelmäßige, oft vermikulare Poren- und Kristallitformen entstehen, welche die Eigenschaften ungünstig beeinflussen. Zwar kann diese unerwünschte Gefügeentwicklung im Rahmen von Sol/Gel-Techniken, die von AIOOH ausgehen, durch zusätzliche Beifügung von möglichst feinkristallinen Korund-Keimen weitgehend unterdrückt werden (neuere Ausführungen wie US-5395407 beschreiben z.B. dichte polykristalline Schleifkörner mit mittleren Kristallitgrößen von 0,2-0,4 µm), es ist jedoch bezweifelt worden, ob für Sol/Gel-Verfahren typische Defekte dabei tatsächlich vermieden werden können (A. Krell u.a., EP - 678 489 A1).

Es besteht deshalb ein verbreitetes Interesse an der Entwicklung von technisch einfacher handhabbaren Verfahren zur Herstellung von porösen Al₂O₃-Sinterprodukten mit Porengrößen < 2,5 nm (bei hoher Permeabilität) und von Al₂O₃-Rohstoffen, welche sowohl die Bedingung von Partikelgrößen < 100 nm erfüllen als auch ganz überwiegend als Korund (α-Al₂O₃) vorliegen. Darüber hinaus müssen Technologien zur Umsetzung solcher Rohstoffe in Sinter-Produkte entwickelt werden. Eine α-Al₂O₃-Tonerde, die die genannten Forderungen erfüllt, soll im Folgenden kurz als Nano-Korund bezeichnet werden und sei durch die Begrenzung des Parameters D₅₀ auf einen Wert < 100 nm definiert; vorteilhafterweise sollte darüber hinaus auch eine enge Verteilung der Partikelgrößen erzielt werden, beschrieben durch D₈₄ ≤ 150 nm. Die bei der Synthese von Nano-Korund zu überwindende Schwierigkeit ergibt sich daraus, dass die beiden Forderungen nach extremer Feinkörnigkeit und α-Phase (Korund) gegensätzliche Synthesebedingungen erfordern:
- die thermodynamisch stabile Korundphase erfordert als letzten Schritt in der Abfolge der Phasenumwandlungen stets die *höchste* Transformationstemperatur,
- minimale Korngrößen sind dagegen nur bei *minimalen* Temperaturen zu erhalten.
Ein vorteilhafter Kompromiß wäre am ehesten bei Verwendung von Diaspor als Ausgangsstoff zu erzielen, da dieses Monohydrat als einzige bekannte Vorstufe unter Vermeidung von Übergangsphasen unmittelbar in Korund übergeht, und dies schon bei 450 °C bis spätestens 750 °C, jedoch ist Diaspor weder aus der Aufbereitung natürlicher Vorkommen noch künstlich synthetisiert (z.B. hydrothermal) mit Partikelgrößen < 100 nm bekannt. Wenn aber der Ausgangsstoff nur grobkörnig verfügbar ist, ist auch die einzigartig niedrige Umwandlungstemperatur nicht zur Herstellung von Nano-Korund zu nutzen.

Sonderwege wie der Hydrolyse aktivierter Aluminiumschichten (Li u.a., J. Mater. Sci. Lett. 15(1996)19, 1713) oder der exothermen Reaktion eines Al-Salzes (Al-Nitrat) mit Harnstoff (Bhaduri u.a., NanoStructured Materials 7(1996)5, 487) haben bisher nicht zu ausreichenden Mengen dispergierbaren Nano-Korundes für Untersuchungen zur Herstellbarkeit von Sinterprodukten geführt. Die meisten bisher verfolgten Entwicklungen gehen deshalb von in den Sol-Zustand überführbaren nanokristallinen Al-Hydroxiden, vorzugsweise von Böhmit (AIOOH), oder von Precursoren der Hydroxide aus. Im erstgenannten Fall ist eine besondere Nähe zu überführungsfähigen Lösungen dadurch gegeben, dass Firmen seit langem kommerziellen Böhmit als Pulver oder Sol anbieten, dessen Kristallitgröße ca. 10 nm beträgt und dessen Partikelgröße je nach Dispergierungszustand mit Werten um 50 nm beschrieben wird (z.B. seitens der Fa. Condea (Hamburg) unter den Bezeichnungen Pural SB bzw. Disperal). Ohne zusätzliche Maßnahmen wie Keim- oder Dotierungszusatz wird ausgehend von einem solchen Rohstoff eine Transformation zu α-Al₂O₃ erst bei T_{α} = 1205-1220 °C beobachtet.

Im Rahmen der Verwendung von Böhmit der angegebenen Art ist bekannt, dass T_{α} durch Dotierungen unterschiedlicher Art oder durch Zusatz von Keimen zu niedrigeren Werten verschoben wird. Es ist allerdings auch bekannt, dass dabei eine Transformationstemperatur von 1100 °C nicht nennenswert unterschritten werden kann. So senken nach eigenen Untersuchungen Dotierungen wie Ti, Mn, Zr je nach Art der Einbringung T_{α} auf 1155 ± 20 °C, noch etwas günstigere Werte um 1100 ± 25 °C werden durch die Zugabe von 0,5-4 % Korund- oder Diaspor-Keimen einer mittleren Partikelgröße von 100-150 nm erreicht. Eine Ausnahme unter den Dotierungen bildet der Zusatz von ZnF₂, womit eine Transformationstemperatur von 1035 °C ermöglicht wird; allerdings fördert Fluor das Komwachstum von Al₂O₃, so dass dieser Weg für die Herstellung feinkömigerer Korundkristallite nicht gangbar ist. Prinzipiell kann zwar spekuliert werden, ob noch tiefere T_{α} eventuell mit noch feinkörnigeren α-Keimen < 100 nm denkbar wären, mangels entsprechender Untersuchungsmöglichkeiten blieb aber bisher offen, ob die wirkliche Größe eines solchen Effektes überhaupt relevant wäre. Für solche Untersuchungen in Frage kommende Keime sind aber in definierter Partikelgröße und Reinheit solange nicht verfügbar, wie kein Nano-Korund bekannt ist (die Verwendung lange bekannter, durch Mahlkugelabrieb erzeugter Korundkeime verbietet sich oft aus Gründen der Reinheit, da wirklich feinkörniger Abrieb vor allem aus SiO₂-haltigen Al₂O₃-Mahlkugeln entsteht). Zwar behaupten Burgard u.a., Untersuchungen zur Korund-Synthese aus Precursoren mit "nanokristallinen α-Al₂O₃-Impfkristallen" durchgeführt zu haben (Jahresbericht des Instituts für neue Materialien, Saarbrücken, 1996, S. 46-49), die angeführte anzahlmäßige Teilchengrößenverteilung weist jedoch auf einen Mittelwert der Volumen-Verteilung der Keime um 170 nm und unterscheidet sich somit kaum von den seit 10 Jahren verfügbaren feinkörnigsten kommerziellen Korundpulvern.

Wegen dieser Schwierigkeiten existieren bisher keine Kenntnisse, die für den Zusatz selbst feinkörnigster Keime eine Senkung der Transformationstemperatur T_{α} ausgehend von Böhmit der beschriebenen Art um mehr als etwa 150 °C, d.h. auf weniger als 1050 °C erwarten ließen. Dabei beziehen sich die o.a. Daten der Literatur zu den beobachteten Transformationstemperaturen T_{α} meist auf die Temperatur des Peaks von DTA-Kurven, aufgenommen mit Aufheizraten von 5-10 K/min; diese Temperatur stimmt näherungsweise mit derjenigen überein, bei der eine vollständige Umwandlung in Korund innerhalb einer Zeit t < 30 min zu erzielen ist. Eine teilweise Umwandlung von wenigen Prozent nach langer Zeitdauer ist oft schon bei tieferer Temperatur möglich, technisch aber wenig relevant. Mit mehrstündiger Glühung kann unter Zusatz der feinkörnigsten Keime ein Anteil von 80-100 % Korundphase ab ca. 1000 °C erzielt werden. Angesichts dieser hohen, bisher nicht unterschrittenen Transformationstemperaturen ist es nicht verwunderlich, dass keine der genannten Maßnahmen bisher zu Entwicklung von redispergierbarem, kommerziell herstellbaren Nano-Korund geführt hat.

Es ist deshalb seit langem versucht worden, das Problem der hohen Transformationstemperaturen und des damit verbundenen Partikelwachstums dadurch zu überwinden, dass ausgehend von Precursoren ein nicht nur bezüglich der Kristallitgrößen nanoskaliger, sondern auch in seiner Partikelstruktur auf diesem Niveau dispergierbarer Böhmit als Rohstoff synthetisiert wurde. Herkömmlich erfolgt dies durch Hydrolyse von Al-Alkoxiden in Wasser bei Temperaturen > 70 °C, wobei sich Niederschläge bilden, die durch Zugabe von Säure peptisiert werden (B.E. Yoldas, Bull Am. Ceram. Soc. 54(1975)3, 289-290). Die Niederschlagsbildung macht es schwer, die Partikelgröße wie gewünscht zu kontrollieren, und auch die ausgeprägte Form-Anisotropie des entstehenden Böhmites ist für viele Anwendungen ungünstig. Bei extremem Aufwand zur Unterdrückung des Wachstums der Böhmitkristalle (extreme Verdünnung des Sols von 0,025 mol Al-sec-Butoxid bei auf 8 °C verminderter Temperatur) kann allerdings tatsächlich in der anschließenden Kalzination eine beginnende Korundbildung bereits ab 500 °C beobachtet werden (ca. 10 % Korund nach 4 Stunden - Kamiya u.a., J. Ceram. Soc. Japan / Int. Edition 104(1996)7, 664); zu einer nennenswerten Ausbeute selbst erst der der Korundbildung noch vorangehenden Übergangsphase θ-Al₂O₃ kommt es jedoch erst bei 800 °C (das sehr klare θ-Al₂O₃-Röntgendiagramm bei Yu u.a., J. Am. Ceram. Soc. 78 (1995) 11, 3149, wurde irrtümlich als Korund fehlbestimmt). Die eigentliche Transformationstemperatur für die Korundbildung aus optimierten organischen wie anorganischen Precursoren liegt nach übereinstimmenden Angaben der fortgeschrittenen Literatur bei T_{α} = 1100 ± 20 °C und somit nicht tiefer, als auch ausgehend von kommerziellem Böhmit (dotiert oder mit Keimen versetzt) bekannt:
- 1080 °C ausgehend von Al-tri-Isopropoxid (Günay u.a., 3. Euro-Ceramics (1993), Bd. 1,651),
- 1100 °C ausgehend von Al-sec-Butoxid oder von Al-Chlorohydrat Al₂(OH)₅Cl·(2...3H₂O) (Oberbach u.a., cfi/Ber. DKG 74(1997)11/12, 719),
- 1095-1113 °C ausgehend von Al-Nitrat (Wood u.a., Mater. Res. Symp. Proc. Bd. 180(1990), 97).

Angesichts der T_{α} um 100-200 °C verringernden Wirkung von Korund- oder Diaspor-Keimen bei Verwendung kommerziellen Böhmites war deshalb zu erwarten, dass die Einbringung von Keimen in die von Precursoren ausgehenden Verfahren die Korund-Bildungstemperatur auch hier um einen ähnlichen Betrag, d.h. auf 900-1000 °C verringert und so kleinere Kristallitgrößen ermöglicht. Die bisher aus solchen Versuchen bekannt gewordenen Ergebnisse bestätigen diese Vermutung allerdings nur bezüglich der Temperatur und nur für einzelne der untersuchten Precursoren. Enttäuschenderweise erwies sich die angestrebte Herstellung von Nano-Korund selbst dort, wo T_{α} tatsächlich reduziert wurde, als auf diesem Wege unmöglich, und gerade fortgeschrittene Untersuchungen mit den feinkörnigsten Keimen weisen im Gegensatz zu den Erwartungen einen völlig fehlenden Einfluß der Keim-Zusätze auf die Korngröße des synthetisierten Korundes aus:
- Ausgehend von Al-sec-Butoxid sind 10 Masse-% Fe₂O₃-Keime (Hämatit) erforderlich, um T_{α} auf 970 °C zu senken, dennoch ist die "Herstellung von sehr feinem α-Al₂O₃ mit dieser Methode nicht möglich" (Oberbach u.a., cfi/Ber. DKG 74(1997)11/12,719).
- Ausgehend von Al-Chlorohydrat Al₂(OH)₅Cl·(2...3H₂O) kann T_{α} zwar sogar auf 750 °C vermindert werden, jedoch wird eine Kristallitgröße von ca. 60 nm (bei größerer, nicht spezifizierter Partikelgröße!) nur dann aufrecht erhalten, wenn die Kalzinierungstemperatur auf 700 °C begrenzt wird, während zur vollständigen Entfernung des für die weitere Nutzung des Syntheseproduktes ungünstigen Chlors 900 °C erforderlich sind. Ein dritter Nachteil neben Partikelgröße und Chlorgehalt besteht in der Notwendigkeit der Verwendung des sehr speziellen, schwierig herzustellenden Precursors Al₂(OH)₅Cl·(2...3H₂O): wird statt dessen unbehandeltes Al-Chlorid eingesetzt, so beträgt T_{α} trotz Keimzusatz 1100 °C (Oberbach u.a., cfi/Ber. DKG 74(1997)11/12, 719). Die wichtige Rolle des Chlors für die innere Defektstruktur der kalzinierten Gele und somit für das weitere Transformationsverhalten wurde auch von anderer Seite bestätigt (Wood u.a., Mater. Res. Symp. Proc. (1990), Bd. 180, 97).
- Dieses Problem versuchten Sharma u.a. (J. Am. Ceram. Soc. 81 (1998) 10, 2732-34) ausgehend von üblichem Al-Chlorid AlCl₃·5H₂O und unter Zusatz von 4 % - Al₂O₃-Keimen auf dem (aufwendigen) Wege einer Hydrothermal-Behandlung zu lösen. Zwar konnte damit für diesen Precursor die zur vollständigen Umwandlung der Vorstufen in Korund erforderliche Temperatur auf 950 °C verringert werden, wobei die mittlere Partikelgröße aber auf 111 nm anstieg (gegenüber 60-70 nm im noch Böhmit-haltigen Hydrothermal-Produkt).
- Auch die Substitution der Chloride durch Al-Nitrat führte bisher nicht zu Nano-Korund mit einem Medianwert der volumenmäßigen Verteilung von D₅₀ < 100 nm; überraschenderweise ergeben dabei auch zusätzlich eingebrachte Nano-Korundkeime kein feinkristallineres Syntheseprodukt. Zwar berichtet DE - 195 15 820 A1 (D. Burgard u.a.) von einem bei 1050 °C kalzinierten Korundpulver mit Teilchengrößen zwischen 40 und 60 nm, der Hauptautor präzisiert aber an zwei anderen Stellen diese Aussage in wesentlichen Punkten. (1) Eine Publikation von Ma, Burgard und Naß (Jahresbericht des Instituts für neue Materialien, Saarbrücken, 1994, S. 65-67) zeigt, dass es sich bei der Angabe der Offenlegungsschrift um eine röntgenographisch bestimmte Primär*kristallit*größe handelt. (2) Bei ansonsten gleichem Verfahren wird unter Zusatz von Korund-Keimen trotz reduzierter Korund-Bildungstemperatur überraschenderweise keine feinere Kristallitgröße erzielt, sondern eine *ähnliche* Primärteilchengröße von 50-60 nm beobachtet, gemessen am Maximum der anzahlmäßigen Verteilung (D. Burgard u.a., Jahresbericht des Instituts für neue Materialien, Saarbrücken, 1996, S. 46-49); die angeführte anzahlmäßige Verteilungskurve des redispergierten Syntheseproduktes zeigt, dass D₅₀ der *volumenmäßigen* Verteilung im Bereich 130-170 nm liegt und somit gegenüber den feinkörnigsten kommerziellen Tonerden nicht verringert werden konnte. Die verwendeten Keime werden als "daraus [aus dieser Synthese] hergestelltes nanokristallines α-Al₂O₃" beschrieben, ohne die Eigenschaften näher zu quantifizieren.
- α-Al₂O₃- und Hämatit-Keime wurden auch im Rahmen der glycothermalen Synthese von Korundpartikein ausgehend von in Butandiol gelöstem Gibbsit (Al(OH)₃) verwendet. Zwar konnte die Partikelgröße des gebildeten Korundes durch eine wachsende Konzentration von α-Al₂O₃-Keimen von 3-4 µm auf schließlich 100-200 nm vermindert werden, die Herstellung von Nano-Korund war jedoch nicht möglich.

Zusammenfassend sind die **Nachteile des bekannten Standes der Technik** dadurch zu beschreiben, dass kein Verfahren existiert, mit dem ein chlorfreier Nano-Korund mit einer durch D₅₀ < 100 nm beschriebenen Partikelgrößenverteilung in einer zur Weiterverarbeitung in Sinterprodukten ausreichender Menge mit oder ohne Nutzung von Keimen herstellbar wäre; der Ausdruck chlorfrei beschreibt hierbei Zusammensetzungen mit weniger als 0,05 Masse-% Chlor (z.B. als Verunreinigung). Auch sind keine aus solchem Nano-Korund herstellbare Sinterkorund-Produkte mit Submikrometer- oder Nanostrukturen bekannt.

**Aufgabe der Erfindung** ist daher die Beschreibung eines auf chlorfreien Precursoren der Al-Hydrate bzw. -Hydroxide aufbauenden und für technische Maßstäbe handhabbaren Verfahrens zur Herstellung von redispergierbarem Nano-Korund bei Temperaturen ≤ 950 °C sowie die Beschreibung von pulverförmigen oder gesinterten Korund-Produkten und deren Herstellung. Die Charakterisierung des Nano-Korundes durch D₅₀ < 100 nm grenzt das angestrebte Rohstoff-Produkt von den bisher feinkörnigsten kommerziell verfügbaren Korundpulvern ab, welche mittlere Partikelgrößen ≥ 150 nm aufweisen und aus denen zwar noch Fraktionen < 200 nm, jedoch kaum noch nennenswerte Anteile < 100 nm abzutrennen sind. Die Zielsetzung eines für technische Maßstäbe handhabbaren Verfahrens schließt Methoden aus, die nur äußerst geringe Tagesproduktionen ermöglichen (wie die oberflächliche Hydrolyse von Aluminium-Metall oder das explosionsartige Verglühen von Aluminium-Metallfäden) oder bei denen die Ausbeute an feinkörnigen, redispergierbaren Korundpartikeln < 100 nm weniger als 25 % des insgesamt anfallenden Al₂O₃ ausmacht.
Aufgabe der Erfindung ist weiterhin die Herstellung dichter und poröser gesinterter Korund-Produkte aus dem erfindungsgemäß hergestellten Nano-Korund oder seinen speziellen Vorstufen und die Beschreibung solcher Produkte.
Der Begriff Korund kennzeichnet dabei für Pulver und Sinterkeramiken Zusammensetzungen von mehr als 98 % Al₂O₃, die erfindungsgemäß hergestellt werden, wobei das Aluminiumoxid zu mehr als 60 % (in Pulvern) und zu mehr als 75 % (in Sinterprodukten) als Korundphase (α-Al₂O₃) vorliegt und mit den für solche Produkte üblichen, das Sinterverhalten beeinflussenden Dotierungen oder Verunreinigungen versehen sein kann; diese Dotierungen oder Verunreinigungen können auf bekannte Art eingebracht werden. Hinsichtlich des Korundanteils des Al₂O₃ sind in Pulvern höhere Gehalte von mehr als 80 % und in Sinterprodukten solche von mehr als 95 % bevorzugt, jedoch ist der quantitativ exakte röntgenographische Nachweis oft schwierig wegen des unterschiedlichen Kristallisationsgrades der unterschiedlichen Al₂O₃-Phasen. Speziell in synthetisierten, überwiegend als Korundphase vorliegenden Pulvern kann ein im Vergleich mit Sinterprodukten höherer Restgehalt an Übergangsphasen dann toleriert werden, wenn die Teilchenstruktur eine ausreichende Redispergierbarkeit auf dem geforderten Niveau der volumenmäßigen Partikelgrößenverteilung gewährleistet; beim Sintern wirken die Korundpartikel des Pulvers dann auf den Restgehalt an Übergangsphasen als Keime und sichern die Entwicklung einer homogenen Gefügestruktur.

Die Aufgabe wird durch die in den unabhängigen Ansprüchen angegebenen Merkmale gelöst. Vorteilhafte Weiterbildungen finden sich in den abhängigen Ansprüchen.

**Das erfindungsgemäße Verfahren zur Herstellung von redispergierbarem Nano- Korund** mit einer mittleren Partikelgröße D₅₀ < 100 nm unter Zusatz von Keimen, welche in der abschließenden Glühung die Transformation von Korund fördern erfolgt nach folgenden Schritten:
- Der chlorfreien anorganischen Precursor-Lösung oder Precursor-Sol werden Keime beigefügt, welche die abschließende Korundbildung begünstigen. Für das hier beschriebene Verfahren haben sich Keimkonzentrationen zwischen 2 und 20 Masse-% (bezogen auf die Al₂O₃-Ausbeute) als günstig erwiesen. Bekannte Keimarten sind Korund- (α-Al₂O₃-), Diaspor- oder Hämatit- (α-Fe₂O₃-) Kristalle. Da Keime vor allem dann wirksam sind, wenn sie sehr feinkörnig vorliegen, benutzen bekannte Verfahren (z.B. bei der Sol/Gel-Herstellung von dichtgesinterten KorundSchleifmitteln mit Submikrometer-Gefüge aus kommerziellem Böhmit) Korundkeime, die durch Mahlkugelabrieb oder Klassierung gröberer Tonerden gewonnen werden müssen. Beides ist schwierig und wenig wirtschaftlich. Dagegen wird die Verwendung feinst-kristalliner Keime im Zuge der vorliegenden Erfindung dadurch wesentlich erleichtert, als das erfindungsgemäße Produkt Nano-Korund selbst als Keim-Material für folgende Synthesen eingesetzt werden kann.
- Die Hydrolysierung der Lösung oder des Sols wird durch Hinzufügen einer Base im Mol-Verhältnis Base : Precursor = 1 bis 3 herbeigeführt.
- Daran schließt sich eine Alterung bei Temperaturen von 60 bis 98 °C für 1 bis 72 h an.
- Die Kalzinierung der hydrolysierten und gealterten Lösung oder des Sols zur Überführung der hydrolysierten Precursoren in quasi-amorphe Zwischenphasen (Al-Hydroxid) und dann zu Übergangstonerden erfolgt bei 350 - 650 °C, vorteilhafterweise zwischen 400 °C und 600 °C für 0,5-2 h.
- Die Glühung zur Korundbildung erfolgt bei Temperaturen ≤ 950 °C. Zur Aufrechterhaltung einer feinen Partikelgröße sind Zeiten von 0,5 - 1 h günstig, vorteilhafte Ergebnisse werden bei 650 - 900 °C erzielt.
Wenn die Glühung im oberen Bereich dieses Temperaturintervalls erfolgt, geht sie mit einer partiellen Bildung erster Sinterhälse zwischen einzelnen der Pulverpartikel einher. Im Falle einer für die weitere Verwendung des Pulvers notwendigen Redispergierung kann diese z.B. durch Mahlung erfolgen. So, wie in den bekannten, an die o.a. Arbeit von Yoldas angelehnten Verfahren der entstehende gröbere bzw. agglomerierte Teil des gebildeten Böhmits durch übliche Verfahren wie Zentrifugieren und Dekantieren abgetrennt wird, ist es auch hier möglich, verbleibende Agglomerat-Reste auf gleiche Weise von den redispergierten Einzelpartikeln abzuscheiden. Dies ist im Rahmen des erfindungsgemäßen Verfahrens insbesondere deshalb vorteilhaft möglich, weil hier der Nachteil anderer Verfahren, die nur eine unwirtschaftlich geringe Ausbeute an redispergierbaren Korundpartikeln < 100 nm von weniger als 25 % des insgesamt anfallenden Al₂O₃ erzielen, vermieden wird.

Im Zuge der Kalzinierung wird vorteilhafterweise ein Korund-Anteil des Al₂O₃ von mehr als 80 % erzeugt. Falls dafür jedoch (bestimmt durch die konkrete Form der vorangegangenen Synthese) eine Kalzinierungstemperatur von 800-900 °C erforderlich ist, kann es mit Blick auf die angestrebte gute Redispergierbarkeit des kalzinierten Nano-Korundes und mit Rücksicht auf die dem entgegenwirkende, ab etwa 800 °C einsetzende Sinterhalsbildung vorteilhaft sein, eine tiefere Kalzinierungstemperatur zwischen 650 und 800 °C zu bevorzugen und im Kalzinierungsprodukt einen geringeren Korundanteil von 70-80 % in Kauf zu nehmen. Eine ungünstige Beeinflussung der Gefügeentwicklung beim Sintern, wie dies z.B. als Entwicklung vermikularer, inhomogener Porenstrukturen beim Sintern undotierter oder nicht mit Korundkeimen versetzter Übergangstonerden bekannt ist, tritt hierbei nicht auf, da das erfindungsgemäß hergestellte Kalzinationsprodukt in jedem Fall ganz überwiegend aus Korund besteht und somit genügend Keime für die homogene Umwandlung des Restgehaltes an Übergangstonerden in Al₂O₃ beim Sintern bietet.
Das Verfahren wird im Interesse extremer Feinkörnigkeit und Homogenität des erzeugten Nano-Korundes vorteilhaft beeinflußt, wenn zwischen Kalzination (Überführung des quasi-amorphen Hydroxids in Übergangstonerden) und Korundbildung eine zusätzliche Mahlung der Übergangstonerden erfolgt. Die Mahlung in einem Alkohol ist besonders vorteilhaft, da hier die in Wasser mögliche Bildung von Hydrat-Bindungen zwischen den feinkristallinen Partikeln unterbunden wird.

Während die die Korundbildung fördernde Wirkung von Keimen zum allgemeinen Grundwissen der Fachwelt gehört und anderseits bisher die Unmöglichkeit dokumentierte ist, damit die spezielle Aufgabe der Herstellung von Nano-Korund im oben beschriebenen Sinne zu lösen, besteht **der Kern des erfindungsgemäßen Verfahrens** in der überraschenden Erkenntnis einer qualitativ andersartigen, bisher unbekannten Wirkung von Keimen, wenn sie in besondere, für anorganische und organische Precursoren zu unterscheidende Verfahren der Hydrolyse dieser Precursoren eingebunden werden. Das erfindungsgemäße Verfahren ermöglicht dann nicht nur die Reduzierung der erforderlichen Korundbildungstemperatur auf T_{α} ≤ 950 °C, sondern verbindet damit die Erzeugung redispergierbarer Pulverpartikel mit einer mittleren Partikelgröße der volumenmäßigen Verteilung von d₅₀ < 100 nm auf einfache, in der Technik umsetzbare Art. Auf diese Weise sind auch poröse und dichte Sinterprodukte der *Korund*phase mit entsprechend kleiner Poren- oder Gefügekorngröße herstellbar. Da die Korundsynthese hierbei anders als bekannt über ein quasi-amorphes Al-Hydroxid verläuft, welches noch vor der Korundbildung zur Entstehung feinkömigerer Übergangsphasen des Al₂O₃ führt, können ausgehend von einfach handhabbaren Rohstoffen poröse Al₂O₃-Sinterprodukte mit Porengrößen von typischerweise 10-100 nm hergestellt werden, die sich von vorbekannten Al₂O₃-Keramiken dieses Porengrößenbereiches durch ihren stofflichen, eine hohe chemische Stabilität gewährleistenden Aufbau aus Alpha-Al₂O₃, durch eine gleichförmig-runde Partikel- und Porenform verbesserter Permeabilität und durch die einfachere Herstellung unterscheiden.

Die Herstellung von redispergierbarem Nano-Korund mit einer mittleren Partikelgröße D₅₀ < 100 nm kann auch so durchgeführt werden, dass als Ausgangsstoffe *organische* Precursoren eingesetzt werden. Diese werden ebenfalls unter Zusatz von Keimen, die die Bildung von Korund fördern, in einem flüssigen Medium zu einer Lösung oder einem Sol verarbeitet. Anschließend erfolgt die Hydrolysierung der Lösung oder des Sols entweder unter Wasserüberschuß durch Hinzufügen der Precursor-Lösung oder des Precursor-Sols zu Wasser bei einem Mol-Verhältnis Wasser : Precursor > 3, wobei ebenfalls eine Säure zugegeben wird, die einen pH = 3-5 während der Hydrolyse einstellt, oder die Hydrolyse wird dadurch herbeigeführt, dass der Precursor-Lösung oder dem Precursor-Sol eine durch das Molverhältnis Wasser : Precursor ≤ 3 begrenzete Wassermenge und komplexbildende Liganden zugesetzt werden. Die Alterung wird stufenweise bei ≤ 50 °C innerhalb von 5 h und anschließend bei 80 °C bis 98 °C innerhalb von 1-24 h durchgeführt. Die anschließende Kalzinierung und Glühung erfolgt analog dem Verfahren bei Einsatz von anorganischen Precursoren.

Nach diesen beiden Verfahrensvarianten hergestellte redispergierbare Nano-Korunde können in Pulverform oder als dichte oder poröse kompakte Körper, Schichten oder Granulate vorliegen.

Das erfindungsgemäße redispergierbare Nano-Korund-Pulver hat dabei einen Medianwert der Partikelgrößenverteilung D₅₀ < 100 nm, und weist weiterhin vorteilhafterweise eine enge Breite der Größenverteilung isometrisch geformter Partikel D₈₄ ≤ 150 nm, weniger als 0,05 Ma.-% Chlor und mindestens 60. % Al₂O₃ auf.
Die erfindungsgemäßen dichtgesinterten Korund-Granulate oder Sinterkorundformkörper werden vorzugsweise bei ≤ 1450 °C gesintert und weisen dann eine mittlere Korngröße des Gefüges von ≤ 0,6 µm auf.
Die erfindungsgemäße Herstellung von gesinterten porösen oder dichten Keramik*schichten* betrifft hier poröse Korund-Membranen im Porositätsbereich zwischen typischerweise 10 und 100 nm sowie dichte Sinterkorund-Beschichtungen. Die Herstellung erfolgt analog der Verfahren zur Herstellung von Nano-Korund. Angelehnt an bekannte Sol/Gel-Verfahren kann die Formgebung dadurch erfolgen, dass die hydrolysierten Lösungen oder Sole mit üblichen Maßnahmen auf porösen oder dichten Substraten abgeschieden und getrocknet werden; für andere Anwendungen, z.B. die Herstellung gesinterter Schleifmittel, sind andere Formen, z.B. Granulate unterschiedlicher Größen, durch bekannte Verfahren der Gelbildung oder der Fest/Flüssig-Trennung und Trocknung herzustellen (z.B. Rotationsverdampfung, Sprühtrocknung, Gefriertrocknung).

Zur Herstellung von porösen oder dichten Sinterprodukten wird die angestrebte Dichte entweder schon im Zuge der für die Korundbildung erforderlichen Glühung erreicht oder wird in einer zusätzlichen Sinterbehandlung erzielt.

In beiden Verfahrensvarianten mit anorganischen oder organischen Precursoren können zusätzlich 1-5 Masse-% Modifikatoren, wie nichtionische Tenside (z.B. Sorbitanester), anionische oberflächenaktive Stoffe, anorganische oder organische komplexbildende Liganden (z.B. Acetylaceton, Ethylaceton-Acetat, Diole) den Hydrolysevorgang dadurch positiv beeinflussen, dass sie der Bildung von Agglomeraten entgegenwirken und so die Größe der synthetisierten Partikel vermindern, die Breite der Partikelgrößenverteilung verengen und die Herausbildung einer gleichmäßigen, isometrischen Partikelform begünstigen.

Im Fall chlorfreier *anorganischer* Precursoren erfolgt die Herstellung der Lösung oder des Sols in einem flüssigen Medium. Die Precursor-Lösung oder das Precursor-Sol werden dann durch Hinzufügen einer Base im Molverhältnis Base : Precursor = 1 bis 3 einer kontrollierten Hydrolyse unterzogen; Beispiele geeigneter Basen sind NH₄OH, (NH₂)₂CO, (NH₄)HCO₃, (CH₃)₃NHOH. Der kontrollierte Ablauf der Hydrolyse ist entscheidend für die Realisierung der aufgabengemäßen feinkristallinen Strukturen. Die Alterung erfolgt bei einer Temperatur von 60-98 °C für einen Zeitraum von 1-72 Stunden. Im Ergebnis entsteht ein quasi-amorphes Al-Hydroxid, welches sich gravierend von bekannten, üblicherweise kristallisierten Hydrolyse-Produkten wie Gibbsit (Al(OH)₃) oder Böhmit (ALOOH) unterscheidet. Einer der resultierenden Vorteile ist die Vermeidung stark anisotroper Partikelformen und die sich daraus u.a. ergebenden Möglichkeiten zum Aufbau poröser Al₂O₃-Filtrationsmembranen verbesserter Permeabilität.
Für die Verwendung *organischer* Precursoren sind organische Lösungsmittel, z.B. Alkohole mit Kettenlängen < 8, erforderlich. Die Struktur der gebildeten Lösungen oder Sole und das Kalzinierungsverhalten der Gele unterscheiden sich in Abhängigkeit vom Wassergehalt des Hydrolyse-Mediums. Werden (i) Al-Alkoxide mit Kettenlängen < 8 unter erheblichem Wasserüberschuß in das o.a. quasi-amorphe Al-Hydroxid überführt (z.B. bei einem Molverhältnis Precursor : H₂O > 50), so muß die in Wasser befindliche Lösung oder das Sol durch Zugabe von Substanzen wie HNO₃ oder NH₄NO₃ auf pH = 3-5 eingestellt und so stabilisiert werden. Erfolgt dagegen (ii) die Hydrolyse in einer Umgebung mit geringerem, im Zuge der Hydrolyse. überwiegend gebundenem Wasseranteil (Molverhältnis Wasser : Precursor ≤ 3), so findet sich das Hydrolyseprodukt in einer vom organischen Lösungsmittel dominierten Umgebung und muß in seinem Dispergierungszustand durch geeignete komplexbildende Liganden stabilisiert werden (z.B. Acetylaceton, Ethylacetonacetat). In beiden Varianten (i) wie (ii) wird die Precursor-Lösung oder das Sol zunächst für eine Zeitdauer von weniger als 5 Stunden bei nicht mehr als 50 °C (z.B. bei Raumtemperatur) gealtert, gefolgt von einer 1- bis 24-stündigen Alterungsperiode bei erhöhter Temperatur im Bereich von 80-98 °C.

Im Falle der Herstellung von porösen Membranen werden Lösung oder Sole durch bekannte Maßnahmen auf einem porösen Substrat abgeschieden und getrocknet. Für andere Anwendungen (wie z.B. als Katalysatorträger in Form von Granulaten oder von makroskopischen Körpern definierter Geometrie) sind dagegen andere flüssige oder trockene Formgebungsverfahren wie Gelbildung, Gießen und kaltisostatisches Pressen oder Verfahren der Fest/Flüssig-Trennung (z.B. Rotationsverdampfung, Sprühtrocknung, Gefriertrocknung) nutzbar.

Das quasi-amorphe Al-Hydroxid-Zwischenprodukt kann schon bei niedrigen Temperaturen in Al₂O₃ überführt werden, wobei die Ausführungsbeispiele zeigen werden, dass je nach Prozeßweg und Kalzinierungstemperatur unterschiedliche Al₂O₃-Modifikationen einstellbar sind (z.B. ist es für die Verwendung als Katalysator oft vorteilhaft, kristalline Phasen [wie α-Al₂O₃] mit inhärenten katalytischen Eigenschaften zu vermeiden und statt dessen ein amorphes Produkt zu erzeugen). Die Überführung in ein Al₂O₃-Produkt erfolgt zwischen 350 °C und 650 °C. Diese Temperatur kann durch Zusatz von Al₂O₃-Keimen der gewünschten Phase niedrig gehalten werden, was zu besonders kleinen Partikel- und somit Porengrößen führt. Um speziell die angestrebten *Korund*-Produkte zu erhalten, ist eine Glühung bei Temperaturen ≤ 950 °C, vorzugsweise bei 650-900 °C, erforderlich.

Die Aufgabe der Herstellung dichter oder poröser Sinterprodukte aus dem erfindungsgemäßen Nanokorund oder seinen speziellen Vorstufen ist dann besonders vorteilhaft lösbar, wenn das Risiko schrumpfungsbedingter Defektentstehung dadurch vermindert wird, dass in Abwandlung des oben beschriebenen Verfahrens, bei dem die Formgebung analog zu bekannten Sol/Gel-Verfahren noch vor der Kalzinierung erfolgt, dieser Schritt **bei pulvertechnischen Verfahren** erst nach erfolgter Korundbildung vorgenommen wird; zweckmäßigerweise wird das Pulver zwischen der zur Korundbildung erforderlichen Glühung und der Formgebung deagglomeriert, z.B. durch Mahlung. Ein solches Verfahren ist unabhängig von der speziellen Form der erzeugten Produkte anwendbar, es ist für Körper regelmäßiger Geometrie ebenso nutzbar wie für irregulär geformte Produkte (z.B. Schleifmittel-Körner oder Sintergranulate als Katalysatorträger) - entscheidend ist nur die Verbindung einer ausreichend hohen relativen Dichte der "grünen" (d.h. noch ungesinterten) Formkörper von mehr als 55 % mit einer optimal-homogenen Packungsstruktur der deagglomerierten Nano-Partikel. Eine solche Pulvertechnologie unter Verwendung des erfindungsgemäßen Nano-Korundes eliminiert in den geformten Produkten (Membranen, Beschichtungen, Sintergranulate, Sinterformkörper) den defektbildenden Einfluß von Schwindungen, wie sie mit der Trocknung von Solen oder Gelen, der Umwandlung der Hydroxide in Al₂O₃ oder den Phasenumwandlungen des Al₂O₃ bei wachsender Temperatur bis zur Korundbildung verbunden sind.

Bei Abscheidung speziell von Korund-Schichten können wegen dieser verminderten Gesamt-Schwindung wie auch wegen der dann vielfältigeren Beschichtungsmöglichkeiten dickere Schichten erzeugt werden als im Rahmen der Sol/Gel-Verfahren. Gleichzeitig wird durch die geringe Partikelgröße des Nano-Korundes der von Sol-Gel-Prozessen bekannte Vorteil hoher Sinteraktivität aufrechterhalten. Auf diese Weise werden dichte Sinterkorundschichten mit Submikrometer-Gefügen mittlerer Korngröße ≤ 0,5 µm schon bei Temperaturen ≤ 1250 °C erzeugt.

Eine besonders vorteilhafte Ausschöpfung des hohen Potentials an Sinterfähigkeit, das Nanopartikel auszeichnet, ist dann gegeben, wenn es gelingt, eine möglichst ideale Homogenität der Partikelpackung in der abgeschiedenen, zunächst noch ungesinterten Schicht zu realisieren, z.B. durch Abscheidung der Partikel des hydrolysierten Soles oder aus einer Suspension ideal dispergierten Nano-Korundes per Elektrophorese. Bei entsprechender Homogenität der Partikelpackung, die natürlich auch mit anderen bekannten Verfahren zu erzielen ist, kann die Temperatur zur Herstellung dichter Sintergefüge auf Werte ≤ 1150 °C reduziert und die Korngröße des Sinterproduktes auf Werte ≤ 0,4 µm verringert werden.
Darüber hinaus sind elektrophoretische Prozesse natürlich auch zur Abscheidung von Beschichtungen aus Suspensionen der erfindungsgemäß kalzinierten Übergangsphasen oder des quasi-amorphen Al-Hydroxid-Zwischenproduktes nutzbar und können auch für poröse metallische Substrate angewandt werden.

Die erfindungsgemäß hergestellten **Produkte weisen folgende hervorragende Merkmale auf,** die teilweise an spezielle Herstellungsbedingungen gebunden sind:
- Redispergierbarer Nano-Korund, hergestellt nach dem erfindungsgemäßen Verfahren unter Nutzung von Keimen, die die Korundbildung fördern, ist gekennzeichnet durch einen Medianwert der Partikelgrößenverteilung D₅₀ < 100 nm der volumenmäßigen Verteilung. Besonders vorteilhafte Verfahrensvarianten ermöglichen eine enge Breite der Größenverteilung isometrisch geformter Partikel mit D₈₄ ≤ 150 nm.
- Erfindungsgemäß hergestellte und im Temperaturbereich zwischen 650 und 1250 °C gesintert poröse Al₂O₃-Sinterprodukte (z.B. Filtrationsmembranen, Sintergranulate als Katalysatorträger) zeigen einen Phasenbestand von mehr als 80 % Korund und verbinden mittlere Porengrößen von 10-100 nm mit einer offenen Porosität ≥ 30 Vol.-%. Der hohe Korundanteil ermöglicht eine hohe chemische und thermische Stabilität. Besonders vorteilhafte diesbezügliche Eigenschaften werden mit Korundanteilen > 96 % erreicht.
- Dichte, erfindungsgemäß hergestellte und bei Temperaturen ≤ 1250 °C gesinterte Korund-Schichten auf einem stofflich andersartigen Substrat (z.B. Metall), Granulate oder Sinterformkörper zeigen mittlere Korngrößen der Gefüge von nicht mehr als 0,5 µm, im Fall von Dichtsintertemperaturen ≤ 1150 °C werden noch feinere Gefügekorngrößen ≤ 0,4 µm erzielt. Das Al₂O₃ der dichtgesinterten Produkte zeigt einen Korundanteil von 100 %.
- Dichte, erfindungsgemäß hergestellte Granulate oder Sinterformkörper, gesintert bei Temperaturen ≤ 1450 °C, bestehen aus Korund mit einer mittleren Korngröße des Gefüges ≤ 0,6 µm.

Im weiteren wird die Erfindung an mehreren Ausführungsbeispielen erläutert.

### Beispiel 1

Alle hier beschriebenen Versuche verzichten auf die Verwendung chlorhaltiger Precursor-Ausgangsstoffe.
Beispiel 1 beschreibt die Herstellung von pulverförmigem Nano-Korund aus einem anorganischen Precursor und unter Verwendung von Diaspor-Keimen. In 1000 ml einer einmolaren wäßrigen Aluminiumnitratlösung (pH < 2) wurden 5,1 g Diaspor-Kristalle (< 0,1 µm) dispergiert. Nach Erwärmung auf 75 °C wurde zwecks Hydrolyse der Aluminiumverbindung eine Ammomiaklsung zugesetzt, bis ein Mol-Verhältnis [NH₄OH]/Al³+] = 2,5 erreicht war; der pH-Wert stieg dabei auf 4,5. Nach dreitägiger Alterung wurde das keimhaltige Sol gefriergetrocknet und die trockene Substanz in einem Elektro-Ofen an Luft für 1 Stunde bei 850 °C kalziniert. Die Pulverausbeute betrug in diesem Versuch 50 g und unterscheidet das Verfahren deutlich von in der Literatur beschriebenen Synthesen, die nur Kleinstmengen ergeben.
Das so gebildete Nano-Korundpulver weist röntgenographisch einen Korundgehalt zwischen 90 und 100 % auf (genauere Aussagen sind wegen der o.a. Schwierigkeiten der Messung nur unter größerem Aufwand möglich). Im Rasterelektronen-Mikroskop zeigt das Produkt eine typische Größe kugelförmiger Teilchen zwischen 25 und 60 nm. Nach einer 6stündigen Dispergierungsmahlung der wäßrigen Suspension (pH = 4) in einer schnellaufenden Horizontal-Rührwerkskugelmühle mit abriebarmen Mahlkugeln aus teilstabilisiertem ZrO₂(+ 3 mol.-% Y₂O₃) und Abtrennen einer Minderheit von ca. 25 Vol.-% verbliebener Agglomerate mittels Zentrifugierung wird mittels Zeta-Sizer (Fa. Malvem, Meßprinzip: Photonenkorrelationsspektroskopie) eine volumenmäßige Partikelgrößenverteilung bestimmt, die durch folgende Parameter gekennzeichnet ist: D₁₆ = 47 nm, D₅₀ = 59 nm, D₈₄ = 65 nm (D₉₀ = 67 nm).
Zum Vergleich seien die ebenfalls mit dem Zeta-Sizer der Fa. Malvern bestimmten Daten der volumenmäßigen Partikelverteilung einer Fraktion < 0,2 µm, abgetrennt aus einer der feinkörnigsten kommerziellen Tonerden (TM-DAR, Boehringer Chemicals Japan) angegeben; die Angaben in Klammern beziehen sich auf Vergleichsmessungen derselben Probe mit der Zentrifuge SA-CP3 der Fa. Shimadzu: D₁₆ = 218 nm (115 nm), D₅₀ = 244 nm (140 nm), D₉₀ = 272 nm (190 nm). Unabhängig von der begrenzten Exaktheit der unterschiedlichen Meßverfahren ist offensichtlich, dass das erfindungsgemäße Produkt einen qualitativen Sprung selbst gegenüber dieser Fraktion des kommerziellen Rohstoffes darstellt. Eine mit dem erfindungsgemäßen Produkt vergleichbare feinkörnigere Fraktion < 100 nm ist dagegen aus dem fortgeschrittenen kommerziellen Pulver gar nicht zu wirtschaftlich relevanten Anteilen zu gewinnen, da ihr Anteil offenbar weniger als 10 % ausmacht.

In einem zweiten Versuch wurde die Kalzinierungstemperatur auf 785 °C vermindert. Selbst unter dieser Bedingung betrug der Korundgehalt des Produktes noch mehr als 60 %. Die nach der Dispergierungsmahlung bestimmte volumenmäßige Partikelgrößenverteilung war mit D₁₆ = 34 nm, D₅₀ = 48 nm, D₈₄ = 60 nm deutlich feiner als im ersten Versuch.

Ein dritter Versuch entsprach in allen Bedingungen dem ersten, nur dass hier die klassierten Diaspor-Keime < 0,1 µm durch eine gleiche Menge des (unklassierten) α-Al₂O₃-Mahlproduktes der Dispergierungsmahlung des ersten Versuches ersetzt wurden. Nach Kalzinierung bei 850 °C war der Phasenbestand so, wie für den ersten Versuch beschrieben. Bei unverändert gleichachsigem Charakter war die Partikelform eckiger mit ungleichmäßigen Kanten der Teilchen. Das Pulver wies eine im Vergleich zum ersten Versuch breitere Verteilung mit einem etwas gröberen Medianwert von D₅₀ = 63 nm bei D₈₄ = 81 nm (D₉₀ = 86 nm) auf.

### Beispiel 2

Zur *Sol*/*Gel-Herstellung* poröser Al₂O₃-Sinterprodukte, die bei einem Phasenbestand von mehr als 80 % Korund (α-Al₂O₃) mittlerer Porengrößen zwischen 10 und 100 nm aufweisen, wurden 0,1 Mol Aluminium-Sec-Butylat (ASB) zunächst mit 0,1 Mol Ethylacetoacetat (EtAc) komplexiert und anschließend in 1 Mol Isopropanol gelöst. Zwecks Hydrolyse wurde diese organische Precursor-Lösung bei Raumtemperatur tropfenweise zu einer mit HNO₃ angesäuerten wäßrigen Suspension von Diaspor-Keimen (< 0,1 µm) gegeben; die Menge der Diasporkeime betrug 10 Masse-% bezogen auf das schließlich synthetisierte Al₂O₃-Produkt, das Molverhältnis H₂O : HNO₃ war 100 : 0,1. Die tropfenweise Zugabe der Precursor-Lösung zur wäßrigen Suspension der Diasporkeime erfolgte solange, bis ein Molverhältnis von ASB : H₂O = 1 : 100 erreicht war. Die so hergestellte Mischung wurde 2 Stunden bei Raumtemperatur gerührt, anschließend erfolgte eine Alterung von weiteren 2 Stunden bei 95 °C unter fortgesetztem Rühren.
Das gebildete Sol zeigte einen pH-Wert von 4 und wurde durch Tauchbeschichtung auf einem porösen Substrat aus α-Al₂O₃ abgeschieden. Das Einsaugen des Sols in die oberen Schichten des Substrates ist mit einer gradierten Änderung des Feststoffgehaltes verbunden und löst den Übergang in den Gelzustand aus. Nach Trocknung und Kalzinieren bei unterschiedlichen Temperaturen an Luft entstanden Filtrationsmembranen folgender Struktur (die Porositätsmessung erfolgte an ungestützten [ substratfreien] Sinterprodukteh wie allgemein üblich):

| **Sintertemperatur und Dauer** | **Porositätsmeßverfahren** | **Phasenbestand** | **mittlere Porengröße** | **Porosität** |
|---|---|---|---|---|
| 900 °C / 2 h | N₂-Adsorption/-Desorption (ASAP-2000) | α-Al₂O₃ | 11 nm | 48 Vol.-% |
| 1000 °C / 2 h | Hg-Porosimeter | α-Al₂O₃ | 23 nm | 39 Vol.-% |

### Beispiel 3

Zur *pulvertechnischen* Herstellung poröser α-Al₂O₃-Sinterprodukte mit Porengrößen zwischen 10 und 100 nm auf anorganischem Weg wurde ein Nano-Korundpulver hergestellt wie im dritten Versuch des Beispiels 1. Nach der Dispergierungsmahlung wurde die Suspension bei einem Feststoffgehalt von 30 Masse-% durch Tauchbeschichtung auf einem porösen Substrat aus α-Al₂O₃ abgeschieden.
Nach Trocknung und Kalzinieren bei unterschiedlichen Temperaturen an Luft entstanden Filtrationsmembranen folgender Struktur (die Porositätsmessung erfolgte an ungestützten [ substratfreien] Sinterprodukten wie allgemein üblich):

| Sintertemperatur und Dauer | Porositätsmeßverfahren | Phasenbestand | mittlere Porengrö ße | Porosität |
|---|---|---|---|---|
| 1000 °C / 2 h | Hg-Porosimeter | α-Al₂O₃ | 21 nm | 48 Vol.-% |
| 1100 °C / 2 h | Hg-Porosimeter | α-Al₂O₃ | 26 nm | 45 Vol.-% |
| 1100 °C / 6 h | Hg-Porosimeter | α-Al₂O₃ | 45 nm | 41 Vol.-% |

### Beispiel 4

Ein technologisch relevantes Kriterium für die wirkliche *Redispergierbarkeit* eines durch Glühung erzeugten Nanokorundpulvers ist dessen Verwendbarkeit in einem defektarmen Fotrmgebungsprozeß und eine auf diesem Wege ermöglichte niedrige Dichtsintertemperatur des kompakten Formkörpers. In einem Beispiel zur Herstellung dichter Sinterkorundprodukte aus Nanokorund-Pulver wurde darüber hinaus besonderer Wert auf eine hohe Reinheit der Prozesse und Produkte gelegt, auf jegliche Dotierung zur Förderung des Dichtsinterns oder zur Begrenzung des Kornwachstums wurde verzichtet.
Die Synthese des Nanokorund-Pulvers erfolgte wie in Beispiel 1 beschrieben mit folgenden Abweichungen: (1) als anorganischer Rohstoff wurde hochreines Aluminiumnitrat verwendet (Al(NO₃)₃, Reinheit >99 %), (2) nach dreitägiger Alterung wurde der überwiegende Teil des Wasser durch Zentrifugierung abgetrennt und der verbleibende gelartige Bodensatz gefriergetrocknet, (3) für die auf 3 h verkürzte Dispergierungsmahlung der wäßrigen Suspension kalzinierten Pulvers in einer schnellaufenden Horizontal-Rührwerkskugelmühle wurden handelsübliche hochreine Al₂O₃-Mahlkugeln (Reinheit > 99,9 %) eingesetzt.
Im Vergleich mit der ursprünglichen Mahlsuspension, deren Feststoffgehalt 33 Masse-% betrug, verringert das Abtrennen der gröberen Bestandteile in der Zentrifuge den Feststoffgehalt der verbleibenden agglomeratfreien Suspension. Diese agglomeratefreie Pulver-Suspension wurde unter Nachregulierung des pH-Wertes auf 4,0 im Ultraschallbad 30 min gerührt und anschließend ohne weitere Veränderung ihres Feststoffgehaltes in einer Druckfiltrationsanlage filtriert. Nach einer Trocknung wurden die Proben 2 h an Luft bei 800°C vorgebrannt (Aufheizrate 0,5 K/min). Die Sinterung erfolgte bei 1285 °C für 2 h an Luft und führt zu einer Dichte von 3,95 g/cm3 (Bestimmung per Auftriebsmethode).
Die elektronenmikroskopische Beobachtung zeigte eine mittlere Korngröße von 0,6 µm, ermittelt per Linienschnittanalyse als das 1,56fache der mittleren Sehnenlänge. Die Vicker-Härte wurde auf einer polierten Fläche mit einer Prüflast des Indenters von 10 kg zu HV10 = 2121 ± 23 bestimmt (Prüfung nach DINV/ENV 843-4). Dieser Wert liegt um 50-100 Einheiten über den höchsten bisher für polierte Oberflächen von undotiertern Sinterkorund bekanntgewordenen HV10-Härten und unterstreicht die Vorteile der Verwendung des erfindungsgemäßen Nanokorundes zur Herstellung dichter Sinterkorundwerkstoffe hoher Härte bei niedriger Sintertemperatur.

## Patentansprüche

1. Verfahren zur Herstellung von redispergierbarem Nano-Korund mit einer mittleren Partikelgröße D₅₀ < 100 nm unter Zusatz von Keimen, welche in der abschließenden Glühung die Transformation zu Korund fördern, bei dem
- als Ausgangsstoffe chlorfreie anorganische Precursoren in einem flüssigem Medium gelöst oder zu einem Sol verarbeitet werden,
- diese Lösung oder das Sol durch Hinzufügen einer Base im Mol-Verhältnis Base : Precursor = 1 bis 3 hydrolysiert wird,
- eine Alterung bei Temperaturen zwischen 60 und 98 °C für 1 bis 72 h erfolgt,
- eine anschließende Trocknung gefolgt wird von einer Kalzinierung bei Temperaturen zwischen 350 und 650 °C zur Überführung des hydrolysierten Precursors in eine quasi-amorphe Zwischenphase und schließlich in Übergangstonerden,
- und eine weitere Glühung zur Überführung in die Korundphase mittels weiterer Temperaturerhöhung auf ≤ 950 °C durchgeführt wird.

2. Verfahren zur Herstellung von redispergierbarem Nano-Korund mit einer mittleren Partikelgröße D₅₀ < 100 nm unter Zusatz von Keimen, welche in der abschließenden Glühung die Transformation zu Korund fördern, bei dem
- als Ausgangsstoffe organische Precursoren in einem flüssigen Medium zu einer Lösung oder einem Sol verarbeitet werden,
- wonach die Hydrolyse entweder unter Wasserüberschuß durch Hinzufügen der Precursor-Lösung oder des Precursor-Sols zu Wasser bei einem Molverhältnis Wasser : Precursor > 3 und unter Zusatz einer zu pH = 3-5 führenden Säure erfolgt oder durch Zugabe einer auf ein Molverhältnis Wasser : Precursor ≤ 3 begrenzten Wassermenge zu dem in diesem Fall mit komplexbildenden Liganden zu versetzenden Precursor-Sol oder der Precursor-Lösung,
- eine Alterung bei Temperaturen von ≤ 50 °C innerhalb von 5 h und anschließend eine Alterung bei Temperaturen von 80 bis 98 °C innerhalb von 1 bis 24 h erfolgt,
- eine anschließende Trocknung gefolgt wird von einer Kalzinierung bei Temperaturen zwischen 350 und 650 °C zur Überführung des hydrolysierten Precursors in eine quasi-amorphe Zwischenphase und schließlich in Übergangstonerden,
- und die weitere Glühung zur Überführung in die Korundphase mittels weiterer Temperaturerhöhung auf ≤ 950 °C durchgeführt wird.

3. Verfahren nach Anspruch 1 oder 2, bei dem die Kalzinierung bei Temperaturen von 400 bis 600 °C für 0,5 bis 2 h und die Glühung zur Korundbildung durch Temperaturerhöhung auf 650 - 900 °C für 0,5 bis 1 h durchgeführt wird.

4. Verfahren nach Anspruch 1 oder 2, bei dem die gebildeten Übergangstonerden und/oder der Korund gemahlen werden.

5. Verfahren nach Anspruch 4, bei dem die Mahlung der gebildeten Übergangstonerden und/oder des Korund in einer organischen Flüssigkeit durchgeführt wird.

6. Nano-Korund-Pulver mit einer engen Partikelgrößenverteilung im unteren Nanometerbereich, herstellbar nach dem Verfahren der Ansprüche 1 oder 2, **dadurch gekennzeichnet, dass** sie eine enge Breite der Größenverteilung isometrisch geformter Partikel D₈₄ ≤ 150 nm, weniger als 0,05 Ma.-% Chlor in der Zusammensetzung aufweisen, zu mindestens 60 % aus α-Aluminiumoxid bestehen und redispergierbar sind.

7. Verwendung von Nano-Korund-Pulver nach Anspruch 6 zur Herstellung von gesinterten Korund-Produkten in Form von dichten oder porösen kompakten Körpern, Schichten oder Granulaten, wobei Korund-Granulate oder Sinterkorundformkörper mit einer mittleren Korngröße des Gefüges von ≤ 0,6 µm bei Temperaturen ≤ 1450 °C dichtgesintert, verwendet werden.

8. Verfahren nach Anspruch 1 oder 2, bei dem nach der Alterung der Lösung oder des Sols eine Gelbildung oder eine flüssige Formgebung durchgeführt wird, danach die Trocknung, Kalzinierung und Glühung erfolgt und nach der Glühung eine Sinterung bei Temperaturen oberhalb der Korundbildungstemperatur durchgeführt wird.

9. Verfahren zur Beschichtung poröser oder dichter metallischer Substrate, bei dem die Partikel des hydrolysierten Sols, hergestellt nach Anspruch 1 oder 2, oder die Partikel einer Suspension von Nano-Korunden, hergestellt nach einem der Ansprüche 1 bis 5, elektrophoretisch auf den metallischen Substraten abgeschieden und anschließend der Glühung unterzogen werden.

10. Verfahren zur Herstellung von gesinterten porösen oder dichten Korund-Schichten, wobei die nach Anspruch 1 oder 2 hergestellte Lösung oder Sol auf ein Substrat aufgebracht wird und danach die Trocknung, Kalzinierung und Glühung durchgeführt wird.

11. Verfahren nach Anspruch 10, bei dem nach der Alterung der Lösung oder des Sols das Material auf einem Substrat abgeschieden wird, wobei die Abscheidung der Schichten unter Gelbildung erfolgt.

12. Verfahren nach einem der Ansprüche 10 oder 11, bei dem nach der Glühung zur Korundsynthese eine Sinterung bei Temperaturen oberhalb der Korundbildungstemperatur durchgeführt wird.

13. Verfahren nach einem der Ansprüche 10 bis 12, bei dem nach der Glühung mindestens eine weitere Beschichtung und mindestens eine weitere Glühung durchgeführt wird.

14. Al₂O₃-Sinterprodukte, hergestellt nach mindestens einem der Ansprüche 8, 10, 11, 12 oder 13, bei denen durch Glühung bei 650 bis 1250 °C ein Phasenbestand von mehr als 80 % Korund und eine mittlere Porengröße von 10 - 100 nm bei einer Porosität von ≥ 30 Vol.-% vorliegt.

15. Dichte Sinter-Korund-Schichten, hergestellt nach einem der Ansprüche 9 bis 13, auf einem stofflich andersartigen Substrat, bei denen durch Sintern bei einer Temperatur von ≤ 1250 °C eine mittlere Korngröße des Gefüges von ≤ 0,5 µm vorliegt.

## Claims

1. Process for producing redispersible nano-corundum with a mean particle size D₅₀ < 100 nm by adding nuclei which, in the final anneal, promote the transformation to corundum, in which process
- as starting materials, chlorine-free inorganic precursors are dissolved in a liquid medium or processed to form a sol,
- this solution or the sol is hydrolysed by the addition of a base in a base:precursor molar ratio of 1 to 3,
- aging takes place at temperatures between 60 and 98°C for 1 to 72 h,
- a subsequent drying operation is followed by calcining at temperatures between 350 and 650°C to convert the hydrolysed precursor into a quasi-amorphous intermediate phase and ultimately into transition aluminas,
- and a further anneal is carried out for conversion into the corundum phase by means of a further increase in temperature to ≤ 950°C.

2. Process for producing redispersible nano-corundum with a mean particle size D₅₀ < 100 nm by adding nuclei which, in the final anneal, promote the transformation to corundum, in which process
- as starting materials, organic precursors are processed in a liquid medium to produce a solution or a sol,
- after which the hydrolysis is carried out either under excess water by adding the precursor solution or the precursor sol to water with a water:precursor molar ratio of > 3 and adding an acid which gives a pH = 3-5, or by adding a quantity of water which is restricted to a water:precursor molar ratio ≤ 3 to the precursor solution or the precursor sol, which in this case is to be mixed with complexing ligands,
- aging takes place at temperatures of ≤ 50°C over the course of 5 h, followed by aging at temperatures of from 80 to 98°C over the course of 1 to 24 h,
- a subsequent drying operation is followed by calcining at temperatures between 350 and 650°C to convert the hydrolysed precursor into a quasi-amorphous intermediate phase and ultimately into transition aluminas,
- and the further anneal is carried out for conversion into the corundum phase by means of a further increase in temperature to ≤ 950°C.

3. Process according to Claim 1 or 2, in which the calcining is carried out at temperatures of from 400 to 600°C for 0.5 to 2 h, and the anneal to form corundum is carried out by increasing the temperature to 650 - 900°C for 0.5 to 1 h.

4. Process according to Claim 1 or 2, in which the transition aluminas which are formed and/or the corundum are milled.

5. Process according to Claim 4, in which the milling of the transition aluminas which are formed and/or of the corundum is carried out in an organic liquid.

6. Nano-corundum powders having a narrow particle size distribution in the lower nanometre range, producible by the process of Claim 1 or 2, **characterized in that** they have a narrow size distribution range over isometrically formed particles D₈₄ ≤ 150 nm, less than 0.05% by mass of chlorine in the composition, comprise at least 60% of α-alumina and are redispersible.

7. Use of nano-corundum powder according to Claim 6 for producing sintered corundum products in the form of dense or porous compact bodies, layers or granules, corundum granules or sintered corundum shaped bodies with a mean grain size of the microstructure of ≤ 0.6 µm which have been dense-sintered at temperatures of ≤ 1450°C being used.

8. Process according to Claim 1 or 2, in which, after the aging of the solution or sol, gelling or liquid shaping is carried out, followed by the drying, calcining and anneal, and after the anneal sintering is carried out at temperatures above the temperature at which corundum is formed.

9. Process for coating porous or dense metallic substrates, in which the particles of the hydrolysed sol, produced according to Claim 1 or 2, or the particles of a suspension of nano-corundums, produced according to Claims 1 to 5, are deposited on the metallic substrates by electrophoresis and are then subjected to the anneal.

10. Process for producing sintered porous or dense corundum layers, in which the solution or sol produced as described in Claim 1 or 2 is applied to a substrate and then the drying, calcining and anneal are carried out.

11. Process according to Claim 10, in which, after the aging of the solution or sol, the material is deposited on a substrate, the deposition of the layers being carried out with the formation of a gel.

12. Process according to either of Claims 10 and 11, in which, after the anneal for corundum synthesis, sintering is carried out at temperatures above the temperature at which corundum is formed.

13. Process according to one of Claims 10 to 12, in which at least one further coating operation and at least one further anneal are carried out after the anneal.

14. Al₂O₃ sintered products, produced as described in one of Claims 8, 10, 11, 12 or 13, in which a phase composition of more than 80% corundum and a mean pore size of 10-100 nm at a porosity of ≥ 30% by volume are produced by annealing at 650 to 1250°C.

15. Dense sintered corundum layers, produced as described in one of Claims 9 to 13, on a substrate of a different type of material, in which layers a mean grain size of the microstructure of ≤ 0.5 µm is produced by sintering at a temperature of ≤ 1250°C.

## Revendications

1. Procédé de préparation de nano-corindon redispersable présentant une taille de particule moyenne D₅₀ < 100 nm, avec addition de germes qui, dans le recuit final, favorisent la transformation en corindon, procédé dans lequel
- on dissout, comme substances de départ, des précurseurs inorganiques exempts de chlore dans un milieu aqueux ou on les traite en un sol,
- on hydrolyse cette solution ou le sol par introduction d'une base dans un rapport molaire base/précurseur = 1 à 3,
- on effectue un vieillissement à des températures comprises entre 60 et 98°C pendant 1 à 72 heures,
- un séchage ultérieur étant suivi d'une calcination à des températures comprises entre 350 et 650°C pour transformer le précurseur hydrolysé en une phase intermédiaire quasi amorphe et enfin en alumines de transition, et
- on effectue un recuit supplémentaire pour la transformation en la phase de corindon au moyen d'une augmentation de température supplémentaire à ≤950°C.

2. Procédé de préparation de nano-corindon redispersable ayant une taille de particule moyenne D₅₀ < 100 nm, avec addition de germes, qui, dans le recuit final, favorisent la transformation en corindon, procédé dans lequel
- on traite, comme substances de départ, des précurseurs organiques dans un milieu liquide, pour former une solution ou un sol,
- après quoi on effectue l'hydrolyse sous un excès d'eau, par introduction de la solution de précurseur ou du sol de précurseur dans l'eau à un rapport molaire eau/précurseur >3 et avec addition d'un acide donnant un pH = 3-5, ou par addition d'une quantité d'eau limitée à un rapport molaire eau/précurseur ≤3 au sol de précurseur ou à la solution de précurseur à additionner dans ce cas de ligands complexants,
- on effectue un vieillissement à des températures de ≤50°C en l'espace de 5 heures et ensuite un vieillissement à des températures de 80 à 98°C en l'espace de 1 à 24 heures,
- un séchage ultérieur étant suivi d'une calcination à des températures comprises entre 350 et 650°C pour transformer le précurseur hydrolysé en une phase intermédiaire quasi amorphe et enfin en alumines de transition, et
- on effectue le recuit supplémentaire pour la transformation en la phase de corindon au moyen d'une augmentation de température supplémentaire à ≤950°C.

3. Procédé suivant l'une des revendications 1 et 2, dans lequel la calcination est effectuée à des températures de 400 à 600°C pendant 0,5 à 2 heures et le recuit pour la formation du corindon est obtenu par augmentation de température à 650-900°C pendant 0,5 à 1 heure.

4. Procédé suivant l'une des revendications 1 et 2, dans lequel les alumines de transition formées et/ou le corindon sont broyés.

5. Procédé suivant la revendication 4, dans lequel le broyage des alumines de transition formées et/ou du corindon est effectué dans un liquide organique.

6. Poudres de nano-corindon présentant une répartition étroite des tailles de particule dans la gamme nanométrique inférieure, que l'on peut préparer selon le procédé suivant l'une des revendications 1 et 2, **caractérisées en ce qu'**elles présentent une largeur étroite de la répartition des tailles des particules formées de manière isométrique D₈₄ ≤ 150 nm et moins de 0,05% en masse de chlore dans la composition et **en ce qu'**elles sont constituées d'au moins 60% d'oxyde d'aluminium α et sont redispersables.

7. Utilisation de poudres de nano-corindon suivant la revendication 6, pour la fabrication de produits de corindon frittés sous la forme de corps, couches ou granules compacts, denses ou poreux, dans laquelle on utilise des granules de corindon ou des corps façonnés en corindon fritté présentant une taille moyenne des grains de la structure de ≤0,6 µm, à un état fritté à densité maximale à des températures ≤1450°C.

8. Procédé suivant l'une des revendications 1 et 2, dans lequel, après le vieillissement de la solution ou du sol, on effectue une formation de gel ou une mise en forme fluide, puis le séchage, la calcination et le recuit ont lieu et, après le recuit, on effectue un frittage à des températures au-dessus de la température de formation de corindon.

9. Procédé de revêtement de substrats métalliques poreux ou denses, dans lequel les particules du sol hydrolysé, préparées suivant l'une des revendications 1 et 2, ou les particules d'une suspension de nano-corindon, préparées suivant l'une des revendications 1 à 5, sont déposées par électrophorèse sur les substrats métalliques et ensuite soumises au recuit.

10. Procédé de préparation de couches de corindon frittées, poreuses ou denses, dans lequel la solution ou sol préparé suivant l'une des revendications 1 et 2 est appliqué(e) sur un substrat et le séchage, la calcination et le recuit sont effectués ensuite.

11. Procédé suivant la revendication 10, dans lequel, après le vieillissement de la solution ou du sol, la matière est déposée sur un substrat, le dépôt des couches ayant lieu avec gélification.

12. Procédé suivant l'une des revendications 10 et 11, dans lequel, après le recuit pour la synthèse de corindon, on effectue un frittage à des températures supérieures à la température de formation de corindon.

13. Procédé suivant l'une des revendications 10 à 12, dans lequel, après le recuit, au moins une autre enduction et au moins un autre recuit sont effectués.

14. Produits de frittage de Al₂O₃, préparés suivant au moins une des revendications 8, 10, 11, 12 et 13, dans lesquels, par recuit à 650 jusqu'à 1250°C, on obtient une consistance de phase de plus de 80% de corindon et une taille moyenne des pores de 10-100 nm pour une porosité de ≥30% en volume.

15. Couches de corindon frittées denses, préparées suivant l'une des revendications 9 à 13, sur un substrat d'un autre type du point de vue matière, dans lesquelles, par frittage à une température de ≤1250°C, on obtient une taille moyenne des grains de la structure de ≤0,5 µm.
